Europäisches Patentamt

European Patent Office

Office européen des brevets

(19)

(11) Publication number : **0 635 793 A2**

# (12) EUROPEAN PATENT APPLICATION

(21) Application number : **94305138.3**

(22) Date of filing : **13.07.94**

(51) Int. Cl.$^6$ : **G06F 17/17**

(30) Priority : **23.07.93 US 96095**

(43) Date of publication of application :
**25.01.95 Bulletin 95/04**

(84) Designated Contracting States :
**DE FR GB**

(71) Applicant : **AT & T Corp.**
**32 Avenue of the Americas**
**New York, NY 10013-2412 (US)**

(72) Inventor : **Schapire, Robert Elias**
**18 Rutgers Street**
**Maplewood, New Jersey 07040 (US)**
Inventor : **Sellie, Linda Margarethe**
**6 Delwick Lane Apt. No. 4**
**New Providence, New Jersey 07974 (US)**

(74) Representative : **Watts, Christopher Malcolm**
**Kelway, Dr. et al**
**AT&T (UK) Ltd.**
**5, Mornington Road**
**Woodford Green Essex, IG8 0TU (GB)**

(54) **Method of automatically approximating a function.**

(57)   A method for finding a result function which is an approximation or an equivalent of a target function. The method derives a hypothesis function from a set of examples which are consistent with the target function. An equivalence oracle is then used to test the hypothesis function. If the equivalence oracle indicates that the hypothesis function is equivalent, the method terminates ; if the function is not equivalent, the equivalence oracle returns a counterexample with which the target function but not the hypothesis function is consistent. The counterexample is used to modify the set of examples and a new hypothesis function is derived from the modified set of examples and tested as described above. The modification of the set of examples is done using a membership oracle, which takes a value from the target function's range and returns the value of the target function on that value. Efficiency is increased by use of a greedy technique involving the meet operation to add examples to the set of examples. The method is applied to functions expressed as polynomials on Boolean variables, but may be applied to functions expressed generally as multilinear polynomials.

EP 0 635 793 A2

## 1 Background of the Invention

### 1.1 Field of the Invention

The invention relates to artificial intelligence generally and more particularly to machine learning systems.

### 1.2 Description of the Prior Art

The goal of a machine learning system is to make predictions about the future based on observations made in the past. In one very common setting, the system tries to make predictions about the value of some function $f$ on a set of variables $x_1,...,x_n$, based on previously observed examples of the function's behavior. (See, for instance Natarajan's book *Machine Learning: A Theoretical Approach* (Morgan Kaufmann, 1991) for detailed background on this problem.)

In general, the learning system may be given access to a stream of examples of the function's behavior. Here, the learning system may be required to make a prediction of the value of the function on each example, and the goal of the learning system is to make as few prediction mistakes as possible.

The learning system may also have the ability to perform "experiments." That is, the learning system may be able to request the value of the function $f$ on a variable setting of the learner's own choosing.

The ability of a learning system to successfully identify the unknown function depends critically on the scheme employed by the system for representing the function. An important method for representing functions is as polynomials defined on the given set of variables.

Previous "interpolation" techniques are known for identifying multivariate polynomials using experiments only (see, for instance, Ben-Or and Tiwari, "A deterministic algorithm for sparse multivariate polynomial interpolation," in *Proceedings of the Twentieth Annual ACM Symposium on Theory of Computing*, pages 301-309, May 1988). However, these techniques fail when the variables can only take on a small number of values; for instance, in real applications, the variables may be boolean, meaning that each can only be assigned the two values 0 and 1.

## 2 Summary of the Invention

The problems of the foregoing techniques are solved by means of a new method of finding a result function which is an approximation of or equivalent to a target function. The new method derives a hypothesis function from a set of examples with which the target function is consistent, tests the hypothesis function against the target function, and if the two are inconsistent, the method uses the meet operation to construct further examples in the set of examples and derives a new hypothesis function from the set of examples. The above steps are then repeated with the new hypothesis function. The technique used to construct the further examples limits the choice of hypothetical functions, and the new method consequently terminates more quickly than prior art methods.

The foregoing and other objects and advantages of the invention will be clear to those of ordinary skill in the art after perusal of the following Drawing and Detailed Description.

## 3 Drawing Description

Figure 1 presents the pseudo-code for the algorithm $L_{EARN}P_{OLY}$, an algorithm for learning polynomials over a field $F$;

Figure 2 presents the pseudo-code for $E_{ASY}C_{OUNTEREXAMPLE}$, a subroutine of $L_{EARN}P_{OLY}$;

Figure 3 presents the pseudo-code for $A_{DD}E_{LEMENT}$, another subroutine of $L_{EARN}P_{OLY}$;

Figure 4 shows a first state of the main data structures maintained by the algorithm $L_{EARN}P_{OLY}$ at various points of its execution on the sample run described below;

Figure 5 shows a second such state; and

Figure 6 shows a third such state. Reference numbers in the figures have two parts: the two least-significant digits are reference numbers within a figure; the remaining digits are the number of the figure in which the item with the reference number first appears. Thus, the item labeled 203 first appears in Figure 2.

## 4 Detailed Description

### 4.1 Background and definitions

The invention disclosed herein pertains to the learnability of multivariate polynomials over a field $F$. The detailed disclosure shows how the invention is applied to a field $F$ defined on $n$ boolean variables; however, the disclosure further includes a proof that the method can be used for learning multilinear polynomials where the domains of the variables are not limited to $\{0,1\}$.

We consider the learnability of such polynomials in a model introduced by Angluin ("Learning regular sets from queries and counterexamples," *Information and Computation*, 75:87-106, November 1987). In this model, the learning algorithm has two forms of access to the unknown target polynomial: The first of these is a so-called *membership oracle* which evaluates the target polynomial $f$ on any variable-setting $\mathbf{a}$ of the learner's choosing and returns the result $f(\mathbf{a})$. Thus, a membership query is just an "experiment" performed on the function.

The second form of access is a so-called equivalence oracle which accepts as input a hypothesis polynomial $h$ conjectured by the learner to be equivalent to the target polynomial. If $h$ and $f$ are functionally equivalent, then the equivalence oracle replies "$_{\text{EQUIVALENT}}$" (in which case we say that the target has been *exactly identified*); otherwise, the equivalence oracle provides a *counterexample*, a setting $\mathbf{a}$ of the variables on which the hypothesis and target polynomials evaluate to different values, i.e., for which $h(\mathbf{a}) \neq f(\mathbf{a})$.

As is well known to those skilled in the art, an equivalence oracle models a situation in which the learning system has computed a hypothesis that it deems to be equivalent to the target function. This hypothesis can be used to make predictions on new examples. If on one of these examples the hypothesis makes a prediction mistake, then this example serves as the desired counterexample to the hypothesis. Thus, in sum, the number of prediction mistakes in such a setting is at most the number of queries made to the equivalence oracle.

Moreover, it is well known that an equivalence oracle can always be replaced by a given set of examples of the polynomial's behavior. That is, each time that a hypothesis is conjectured by the learning system, the given set of examples is searched to find a counterexample. In this case, the learning system will successfully find a hypothesis that is consistent with the given set of examples, and that is "small" relative to the target polynomial. If the original set of examples is drawn randomly according to some distribution, then the hypothesis will be a good approximation of the target polynomial with respect to the distribution on the random examples. Thus, the described technique can be used to learn a good approximation of a polynomial when examples are chosen at random.

Let $f$ be a polynomial over a field $F$ on $n$ boolean variables. Then $f$ is a function mapping the boolean domain $\{0,1\}^n$ into the field $F$, where 0 and 1 are the additive and multiplicative identity elements of $F$. The sparcity of $f$ is the number of nonzero coefficients appearing in $f$; if $f$ has sparcity at most $t$, then $f$ is said to be *t-sparse*.

Since $x^2 = x$ for $x \in \{0,1\}$, we can assume without loss of generality that $f$ is multilinear, i.e., that no variable has exponent greater than one in $f$. It then becomes natural to associate with each monomial the characteristic vector of indices of variables that appear in that monomial. For instance, if $n = 5$ then the monomial $x_1 x_3 x_4$ is associated with the vector 10110. Conversely, every vector $\mathbf{a} \in \{0,1\}^n$ is associated with a monomial which we denote by $\mathbf{x}^{\mathbf{a}}$.

Thus, every t-sparse polynomial can be written in the form

$$f(\mathbf{x}) = \sum_{i=1}^{t} c_i \mathbf{x}^{\mathbf{t}_i} \qquad (1)$$

for some $c_i \in F$ and $\mathbf{t}_i \in \{0,1\}^n$.

Our algorithm depends crucially on the lattice properties of the boolean domain $\{0,1\}^n$. To make this dependence explicit, we will prove our results using an extended notion of "polynomial" for more general domains. Specifically, we will show that such polynomials can be learned if the domain is a meet-semilattice with no infinite chains. (See Davey and Priestley's book, *Introduction to Lattices and Order* (Cambridge University Press, 1990), for detailed background on partial orders and lattices.)

Let $X$ be a set partially ordered by $\leq$. We say that an element $\mathbf{c}$ is the *meet* of $\mathbf{a}$ and $\mathbf{b}$ if for all $\mathbf{d} \in X$, $\mathbf{d} \leq \mathbf{c}$ if and only if $\mathbf{d} \leq \mathbf{a}$ and $\mathbf{d} \leq \mathbf{b}$. Thus, the meet of $\mathbf{a}$ and $\mathbf{b}$, written $\mathbf{a} \wedge \mathbf{b}$, can be viewed as the greatest lower bound of $\mathbf{a}$ and $\mathbf{b}$. If the meet exists for every pair of elements $\mathbf{a}$ and $\mathbf{b}$ in $X$, then $X$ is said to be a *meet-semilattice* (henceforth called simply a *semilattice*).

On the boolean domain $\{0,1\}^n$, it is natural to define a partial order in which $\mathbf{a} \leq \mathbf{b}$ if and only if $a_i \leq b_i$ for

$i = 1,...,n$ (and where we define the usual ordering on $\{0,1\}$ with $0 < 1$). With respect to this ordering, $\{0,1\}^n$ is clearly a semilattice. The meet $\mathbf{a} \wedge \mathbf{b}$ is the vector $\mathbf{c}$ where $c_i = a_i b_i$ for each $i$. (For instance, $01101 \wedge 10101 = 00101$.) Note also that the monomial $\mathbf{x^a}$ is satisfied (i.e., is equal to 1) if and only if $\mathbf{a} \leqq \mathbf{x}$.

For a semilattice $X$, and for any point $\mathbf{a} \in X$, we define a function $\pi_\mathbf{a} : X \to \{0,1\}$ by the rule

$$\pi_\mathbf{a}(\mathbf{b}) = \left\{ \begin{array}{ll} 1 & \text{if } \mathbf{a} \leq \mathbf{b} \\ 0 & \text{otherwise.} \end{array} \right.$$

Analogous to the case where $X$ is the boolean domain, we define a *polynomial over F on semilattice X* to be a function $f : X \to F$ of the form

$$f(\mathbf{x}) = \sum_{i=1}^{t} c_i \pi_{\mathbf{t}_i}(\mathbf{x}) \qquad (2)$$

where $c_i \in F$ and $\mathbf{t}_i \in X$. As noted above, for the boolean domain, $\mathbf{x^a} = \pi_\mathbf{a}(\mathbf{x})$ for any $\mathbf{a} \in \{0,1\}^n$; thus, the definitions given in equations (1) and (2) are equivalent for this domain. Also, consistent with our earlier notion of sparcity, we say that a polynomial of the form given in equation (2) is *t-sparse*, and, if each $c_i$ is nonzero, that the polynomial has *sparcity t*.

For a function $f$, we will use the notation $\tilde{f}$ (a) to denote the coefficient (possibly zero) of $\pi_\mathbf{a}(\mathbf{x})$. Thus,

$$f(\mathbf{x}) = \sum_{\mathbf{a} \in X} \tilde{f}(\mathbf{a}) \pi_\mathbf{a}(\mathbf{x}). \qquad (3)$$

(If $f$ is a polynomial, then it has a finite number of nonzero coefficients, so this sum will be well defined even if $X$ is infinite.) Equivalently, by the definition of $\pi_\mathbf{a}$,

$$f(\mathbf{x}) = \sum_{\substack{\mathbf{a} \in X \\ \mathbf{a} \leq \mathbf{x}}} \tilde{f}(\mathbf{a}).$$

As an aside, we note without proof that if $X$ is finite, then every function $f : X \to F$ can be written uniquely in the form of equation (3). This is because the collection of functions $\{\pi_\mathbf{a}: \mathbf{a} \in X\}$ forms a linearly independent basis for the $|X|$-dimensional space of all functions mapping $X$ into $F$.

If $X$ has any minimal element, then this element must be unique, and it must be smaller than every other element of $X$. Such an element, if it exists, is called a *bottomelement*, and it is denoted $\bot$.

Two elements $\mathbf{a}, \mathbf{b} \in X$ are *comparable* if $\mathbf{a} \leqq \mathbf{b}$ or $\mathbf{b} \leqq \mathbf{a}$. A subset $C \subseteq X$ is a *chain* if every pair of elements in $C$ are comparable. The *length* of such a chain is $|C| - 1$. Thus, a length-$n$ chain can be viewed as a sequence $\mathbf{a}_0 < \mathbf{a}_1 < ... < \mathbf{a}_n$.

If $\bot$ exists, then the *height* of a point $\mathbf{a} \in X$, denoted $\|\mathbf{a}\|$, is defined to be the length of the longest chain starting at $\bot$ and ending at $\mathbf{a}$. The *height* of $X$ is then the maximum height of any element in $X$, or equivalently, is the length of the longest chain in $X$. Thus, semilattice $X$ has finite height if it contains no infinite chains.

On the boolean domain $\{0,1\}^n$, the bottom element is $\mathbf{0}$, the vector whose every component is 0. The height $\|\mathbf{a}\|$ of any vector $\mathbf{a}$ is equal to the number of 1's in the vector $\mathbf{a}$, and the height of the entire domain is $n$.

## 4.2 The Algorithm

In this section, we describe our algorithm for learning polynomials with queries. In later sections, we will show that this algorithm can infer any polynomial over a field $F$ on a finite-height semilattice $X$ in time polynomial in the sparcity $t$ of the target polynomial $f$, and in the height $n$ of the semilattice $X$.

We assume throughout that there exist efficient procedures for computing $\mathbf{a} \wedge \mathbf{b}$, $\|\mathbf{a}\|$, and for deciding if $\mathbf{a}$

$\leq$ **b** for any **a**, **b** $\in X$. Such procedures clearly exist if $X = \{0,1\}^n$. (Specifically, on the boolean domain, we compute $\|\mathbf{a}\|$ simply by counting the number of 1's in the vector **a**; we compute $\mathbf{a} \wedge \mathbf{b}$ by constructing the vector whose $i$th component is the product $a_i b_i$; and we decide $\mathbf{a} \leq \mathbf{b}$ by verifying that $a_i \leq b_i$ for each of the $n$ components.)

We begin by observing that it is easy to find a hypothesis that is consistent with a given set of labeled examples. Specifically, let $S \subseteq X$ be a finite set of examples labeled by $f$. We define a new polynomial $h$ in terms of its coefficients as follows: For $\mathbf{a} \in S$, we define $\tilde{h}(\mathbf{a})$, the coefficient in $h$ of $\pi_{\mathbf{a}}(\mathbf{x})$, using the inductive rule:

$$\tilde{h}(\mathbf{a}) = f(\mathbf{a}) - \sum_{\substack{\mathbf{a}' \in S \\ \mathbf{a}' < \mathbf{a}}} \tilde{h}(\mathbf{a}'). \qquad (4)$$

If $\mathbf{a} \notin S$, then $\tilde{h}(\mathbf{a})$ is defined to be 0. Algorithmically, it is clear that all of the coefficients $\tilde{h}(\mathbf{a})$ can be computed by visiting all of the elements in $S$ from the smallest to the largest; that is, we visit the elements in such an order that no element **a** is visited until every element smaller than **a** has been visited.

The resulting polynomial

$$h(\mathbf{x}) = \sum_{\mathbf{a} \in X} \tilde{h}(\mathbf{a}) \pi_{\mathbf{a}}(\mathbf{x}) = \sum_{\substack{\mathbf{a} \in X \\ \mathbf{a} \leq \mathbf{x}}} \tilde{h}(\mathbf{a}) \qquad (5)$$

is called the *manifest hypothesis of S with respect to f*, and it is denoted $hyp_f(S)$. When $f$ is clear from context we write simply $hyp(S)$.

As mentioned above, $hyp(S)$ is consistent with $f$ on $S$:

**Lemma 1** *Let $f : X \to F$, where $X$ is a semilattice and $F$ is a field. Let $S$ be a finite subset of $X$. Then the polynomial $h = hyp_f(S)$ is consistent with $f$ on $S$; that is, $f(\mathbf{a}) = h(\mathbf{a})$ for all $\mathbf{a} \in S$.*

**Proof:** Note that, by construction of $h$, for every $\mathbf{a} \in S$,

$$f(\mathbf{a}) = \sum_{\substack{\mathbf{a}' \in S \\ \mathbf{a}' \leq \mathbf{a}}} \tilde{h}(\mathbf{a}') = \sum_{\substack{\mathbf{a}' \in X \\ \mathbf{a}' \leq \mathbf{a}}} \tilde{h}(\mathbf{a}')$$

*since* $\tilde{h}(\mathbf{a}) = 0$ for $\mathbf{a} \notin S$. On the other hand, by equation (5), the right hand side of this equation is exactly equal to $h(\mathbf{a})$. ∎

If $h = hyp_f(S)$, then let

$$terms_f(S) = \{\mathbf{a} \in X : \tilde{h}(\mathbf{a}) \neq 0\}.$$

That is, $terms_f(S)$ is the set of elements associated with the nonzero coefficients of $hyp(S)$. Clearly, $terms(S) \subseteq S$, and $|terms(S)|$ is exactly the sparcity of $hyp(S)$. (As with $hyp(S)$, we drop the subscript of $terms_f(S)$ when $f$ is clear from context.)

Although the hypothesis $hyp(S)$ is consistent with a given sample $S$, its sparcity may be quite large relative to the original sample (in fact, it is quite possible that its sparcity is equal to $|S|$ so that $terms(S) = S$). Intuitively, we would therefore not expect $hyp(S)$ to generalize well as a hypothesis for classifying elements outside of $S$. We show below how to find a much smaller consistent hypothesis. Specifically, we show how to construct hypotheses which are no larger than the target function, a technique which will help us in bounding the number of queries made by our algorithm.

Let $t$ be the sparcity of $f$. A key fact, which we prove in a later section, states that if $|terms(S)| > t$ then there must exist a pair $\mathbf{a},\mathbf{b} \in terms(S)$ for which $\mathbf{a} \wedge \mathbf{b}$ is a counterexample for $hyp(S)$. Thus, if $|terms(S)| > t$ then we can find a counterexample to $hyp(S)$ by asking membership queries for the elements $\mathbf{a} \wedge \mathbf{b}$ where $\mathbf{a}, \mathbf{b} \in terms(S)$. We call such a counterexample an easily *observable counterexample* since it can be easily detected using membership queries.

If $hyp(S)$ has no easily observable counterexamples, then we say that $S$ is *stable* with respect to the target function $f$. Thus, $S$ is stable if for every pair $\mathbf{a}, \mathbf{b} \in terms(S)$, $f(\mathbf{a} \wedge \mathbf{b}) = h(\mathbf{a} \wedge \mathbf{b})$ where $h = hyp(S)$. Stability is a key notion in the development that follows.

By repeatedly adding easily observable counterexamples to $S$, we can eventually stabilize $S$ (since there are only a finite number of elements that can ever be added). Unfortunately, if we add the counterexamples in an arbitrary order, we could potentially add an exponential number of new elements before stabilizing. However, we show later in the paper that if we add the counterexamples in a somewhat greedy fashion then we are guaranteed to stabilize after adding at most a polynomial number of elements to $S$.

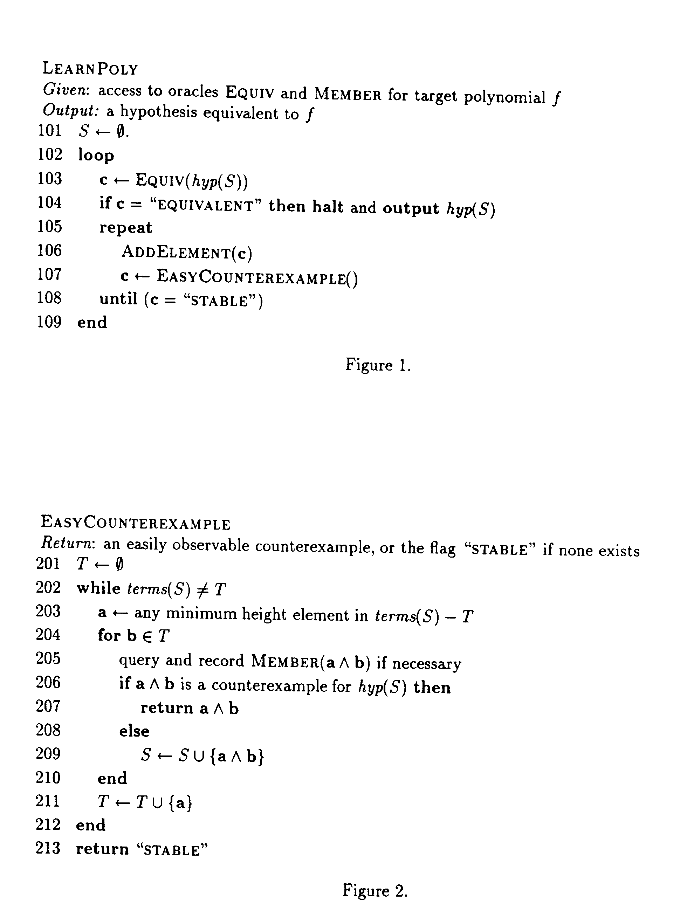

A high-level description of our algorithm is given in Figure 1. In the figure, $E_{QUIV}$ is an equivalence oracle which takes as input a conjectured hypothesis polynomial, and returns either the flag "$_{EQUIVALENT}$" if the hypothesis is equal to the target, or a counterexample for the hypothesis (i.e., an element on which the hypothesis and target functions disagree). We will also be using a membership oracle $M_{EMBER}$ which takes as input an element $\mathbf{a} \in X$ and returns the value of the target on $\mathbf{a}$.

Our algorithm maintains a set of examples $S$ which is stable prior to each equivalence query. After each counterexample $\mathbf{c}$ is received from the equivalence oracle, we use $\mathbf{c}$ to modify $S$ (line 106), and then restabilize $S$ by repeatedly finding easily observable counterexamples (line 107) and using them to again modify $S$.

The subroutine for finding easily observable counterexamples is called $E_{ASY}C_{OUNTEREXAMPLE}$ and is described in Figure 2. The idea of the subroutine is simple: we test pairs $\mathbf{a},\mathbf{b} \in terms(S)$ until we find one for which $\mathbf{a} \wedge \mathbf{b}$ is a counterexample. The subroutine tests pairs in a straightforward greedy fashion so as to find the counterexample $\mathbf{a} \wedge \mathbf{b}$ for which $\max(\|\mathbf{a}\|, \|\mathbf{b}\|)$ is minimized. (We will see later why it is important to add the non-counterexamples to $S$ at line 209.) If no counterexample is found, then $S$ must be stable, and the subroutine returns a flag indicating this fact.

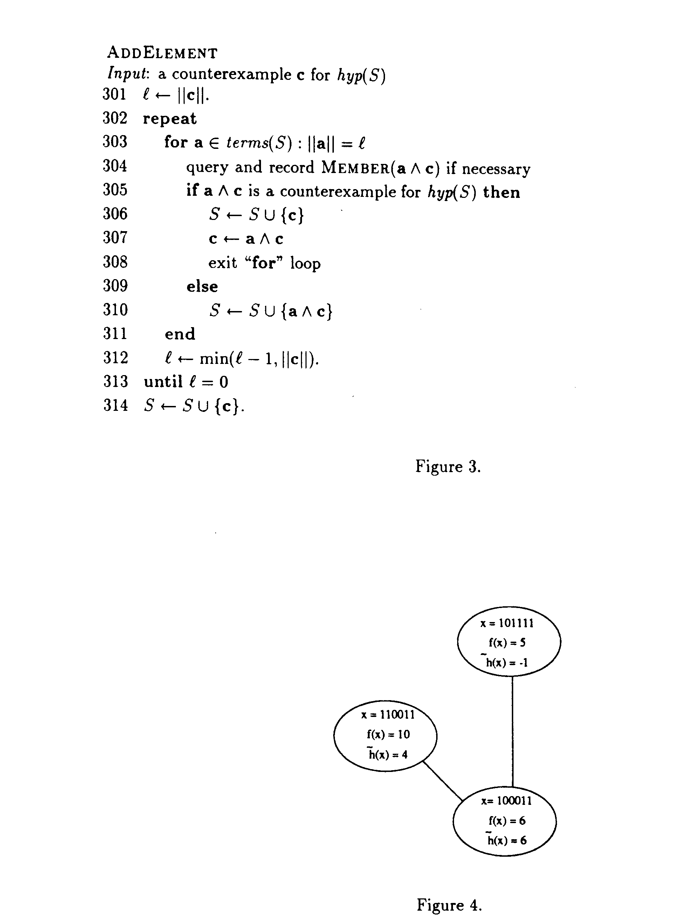

Finally, we describe $A_{DD}E_{LEMENT}$, the subroutine that modifies $S$ using a counterexample $\mathbf{c}$; this subroutine is shown in Figure 3. Before adding $\mathbf{c}$ to $S$, the subroutine first determines if there is another element $\mathbf{a} \in terms(S)$ for which $\mathbf{a} \wedge \mathbf{c}$ is also a counterexample. If such an $\mathbf{a}$ can be found, then we replace $\mathbf{c}$ with the smaller counterexample $\mathbf{a} \wedge \mathbf{c}$. We will see later why this greedy approach is helpful for analyzing the performance of the algorithm. Intuitively, we want to choose the smallest counterexample we can find since such an example is likely to be "closer" to a true term of the target formula.

Note that by adding a new counterexample to $S$, we may radically change the structure and size (i.e., sparcity) of $hyp(S)$. Thus, it is not immediately clear that this technique will allow us to make substantial progress towards stabilization of $S$. The proof that $S$ can be stabilized quickly is given in the following sections and is based on certain combinatorial properties of stable sets.

## 4.3 An Example Run

In this section, we describe a detailed sample run of the algorithm just described.

Suppose that the unknown function we want to learn is $f(x_1,x_2,...,x_6) = 4x_2x_5x_6 + 5x_5x_6 - x_3x_4x_5x_6 + 1$ over the field of rational numbers.

Our algorithm starts by initializing the set $S$ to be empty (line 101). We then begin executing the main loop of our algorithm (lines 102 to 109) which we exit only when our algorithm has discovered the unknown function $f$.

Since initially the set $S$ of vectors is empty, the first hypothesis $h$ is the function which is zero on all inputs. This hypothesis is incorrect on 100% of the 64 possible input values.

Suppose that the counterexample received (line 103) in response to this hypothesis is the vector $\mathbf{c} = 110011$ and it is learned that the value of $f$ on this example is $f(110011) = 10$. (This is a counterexample for $h$ since $h(110011) = 0$.)

Given that a counterexample was received, the subroutine $A_{DD}E_{LEMENT}$ is called at line 106 with $\mathbf{c} = 110011$. At this point the set $terms(S)$ is empty, so $A_{DD}E_{LEMENT}$ does not make any queries and quickly exits the repeat loop, lines 302 to 313. At line 314 the vector $\mathbf{c} = 110011$ is added to $S$ and the subroutine exits.

Next, subroutine $E_{ASY}C_{OUNTEREXAMPLE}$ is called at line 107. Since the set $terms(S) = \{110011\}$, the subroutine does not make any queries and quickly exits the while loop, lines 202 to 212. On line 213 the subroutine exits and returns the flag "$_{STABLE}$".

Since the subroutine returned the flag "$_{STABLE}$" an equivalence query is made at line 103. The current hypothesis for the set $S$ is the polynomial $h = 10x_1x_2x_5x_6$, which has a 95.3% error on the 64 input values.

Suppose the counterexample received to this hypothesis is 101111, and that it is learned that $f(101111) = 5$ (currently $h(101111) = 0$).

The subroutine $A_{DD}E_{LEMENT}$ is called next with $\mathbf{c} = 101111$. At this point the set $terms(S) = \{110011\}$, so a query is made on the vector $110011 \wedge 101111 = 100011$ and it is learned that $f(100011) = 6$, which is a counterexample to $h$ (since $h(100011) = 0$). Therefore the vector 101111 is added to $S$ at line 306 and the vector $\mathbf{c}$ is assigned the value 100011 at line 307. Finding no other queries to make, the subroutine exits the repeat loop. At line 314 the vector 100011 is added to $S$ and the subroutine $A_{DD}E_{LEMENT}$ exits. At this point the set $S$ = $\{110011, 100011, 101111\}$. The lattice representation of $S$ and its associated $f$ and $\tilde{h}$ values are given in Figure 4.

Subroutine $E_{ASY}C_{OUNTEREXAMPLE}$ is called next where the set $terms(S) = \{110011, 100011, 101111\}$. Since the set $S$ is properly stable, the subroutine makes no queries and simply returns the value of "$_{STABLE}$" without adding any new elements to $S$.

Next, an equivalence query is made at line 103, with the hypothesis of the set $S$ equal to $h = 4x_1x_2x_5x_6 - x_1x_3x_4x_5x_6 + 6x_1x_5x_6$, which has a 87.5% error.

Suppose that the counterexample received in response to this hypothesis is the vector 011111, and it is learned that $f(011111) = 9$ (while $h(011111) = 0$).

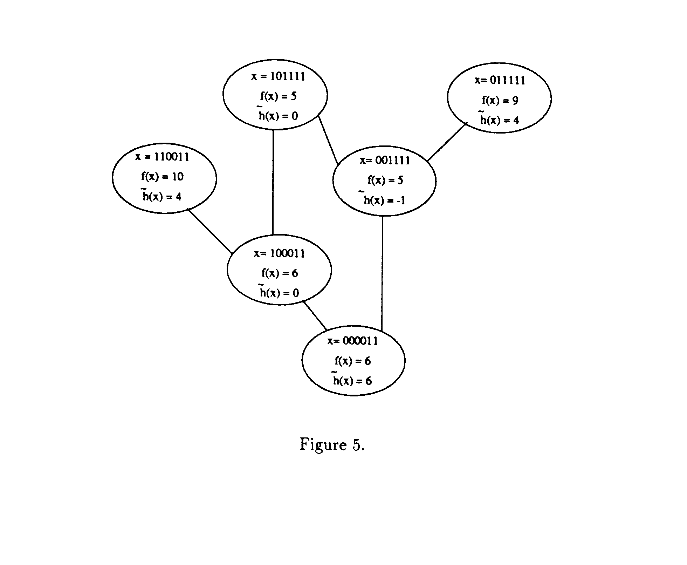

The subroutine $A_{DD}E_{LEMENT}$ is called next with $\mathbf{c} = 011111$. At this point the set $terms(S) = \{110011, 101111, 100011\}$. The algorithm queries the vector $101111 \wedge 011111 = 001111$ and it is learned that $f(001111) = 5$ which is a counterexample to $h$ (since $h(001111) = 0$). Therefore 011111 is added to $S$ at line 306 and $\mathbf{c}$ is set to 001111 at line 307. Next the vector $100011 \wedge 001111 = 000011$ is queried and it is learned that $f(000011) = 6$ which is also a counterexample to $h$ (since $h(000011) = 0$). Thus 001111 is added to $S$ at line 306 and $\mathbf{c}$ is set to 000011 at line 307. No other queries are made in this call to the subroutine. Thus at line 314 the vector 000011 is added to $S$ and the subroutine exits. At this point the set $S$ = $\{110011, 101111, 011111, 100011, 001111, 000011\}$. The lattice representation of the set $S$ is depicted in Figure 5 along with the $f$ and $\tilde{h}$ values for the vectors of the set $S$.

Next, the subroutine $E_{ASY}C_{OUNTEREXAMPLE}$ is called where the set $terms(S) = \{000011, 110011, 001111, 011111 \}$. The subroutine initially checks many vectors whose values are already known. The first query the subroutine makes is $110011 \wedge 011111 = 010011$ where it learns that $f(010011) = 10$. This vector is a counterexample to $h$ (since $h(010011) = 6$). Thus the subroutine exits and returns the vector 010011.

Because a counterexample was found, subroutine $A_{DD}E_{LEMENT}$ is called again with $\mathbf{c} = 010011$. Currently the set $terms(S) = \{000011, 110011, 001111, 011111\}$. No new queries are made during this subroutine. The subroutine exits on line 213 after adding 010011 to $S$.

The subroutine $E_{ASY}C_{OUNTEREXAMPLE}$ is called next on line 107 where the set $terms(S) = \{010011, 000011, 001111\}$. Since the set $S$ is properly stable, the subroutine makes no queries. On line 213 the subroutine exists and returns the flag "$_{STABLE}$".

Because a stable flag was returned from $E_{ASY}C_{OUNTEREXAMPLE}$ an equivalence query is made on line 103 with hypothesis $h = 4x_2x_5x_6 + 6x_5x_6 - x_3x_4x_5x_6$ which has 75% error.

Suppose the counterexample received in response to this hypothesis is the vector 111000 and it is learned that $f(111000) = 1$.

Subroutine $A_{DD}E_{LEMENT}$ is called again, this time $\mathbf{c} = 111000$. Currently the set $terms(S) = \{010011, 000011, 001111\}$. The subroutine queries the vector $111000 \wedge 010011 = 010000$, and learns that $f(010000) = 1$, which is a counterexample to $h$ (since $h(010000) = 0$). Thus the vector 111000 is added to $S$ and $\mathbf{c}$ is set to 010000. Next the vector $010000 \wedge 000011 = 000000$ is queried and learned to be a counterexample to $h$ (since $h(000000) = 0$). Therefore the vector 010011 is added to $S$ and the vector $\mathbf{c}$ is set to 000000. No other queries are made. Therefore line 314 is executed where 000000 is added to $S$ and the subroutine exits. The set $S$ now equals $\{000000, 010000, 000011, 111000, 010011, 100011, 110011, 001111, 011111, 101111$

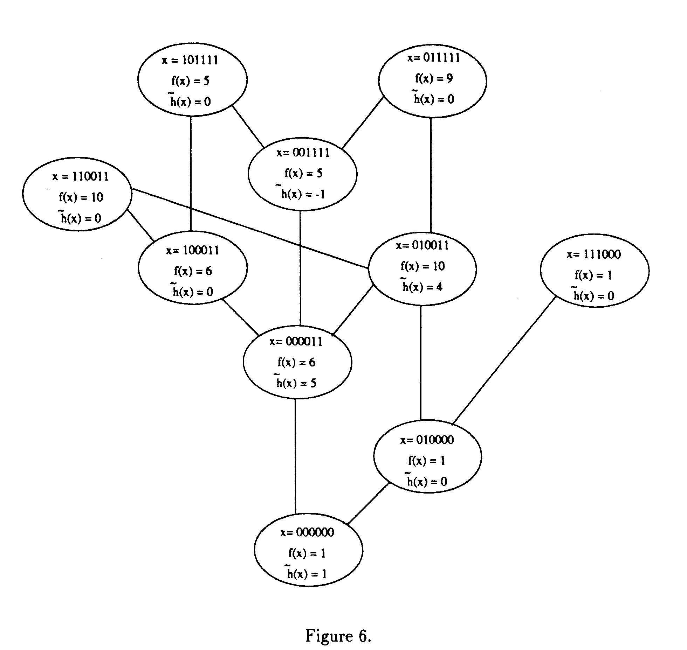

The lattice representation for the set $S$ and its associated $f$ and $\tilde{h}$ values are given in Figure 6.

Subroutine $E_{ASY}C_{OUNTEREXAMPLE}$ is called again with the set $terms(S) = \{000011, 010011, 001111, 000000\}$. Since the set $S$ is a properly stable set, no queries are made and the subroutine returns the flag "$_{STABLE}$".

In the main program the hypothesis $h = 4x_2x_5x_6 + 5x_5x_6 - x_3x_4x_5x_6 + 1$ is tested and the flag "$_{EQUIVALENT}$" is returned. Therefore, the program halts and outputs the function $h$. Thus, the function was identified exactly after only 4 counterexamples were received from the equivalence oracle, and after 6 queries were made to the membership oracle; in other words, the function was identified after having observed its behavior on 10 of the 64 possible input vectors.

## 4.4 Properties of Stable Sets

In this section, we prove various properties of stable sets that will enable us to prove bounds on the number of queries made by our algorithm. In addition to the notion of stability described in the last section, we will also be interested in a slightly stronger notion: We say that a finite set $S \subseteq X$ is *properly stable* with respect to a function $f$ if $\mathbf{a} \wedge \mathbf{b} \in S$ for all $\mathbf{a},\mathbf{b} \in terms_f(S)$. Lemma 1 implies that $S$ is stable if it is properly stable.

We begin with a proof that the sparcity of the manifest hypothesis of a stable set cannot exceed the sparcity $t$ of the target polynomial. This fact, which may be of independent combinatorial interest, will be used repeatedly in the analysis of our algorithm. For instance, because $S$ is stable prior to each equivalence query, this implies that the equivalence queries used by our algorithm are "proper" in the sense that the conjectured hypotheses always belong to the target class of $t$-sparse polynomials.

**Theorem 2** *Let $f$ be a $t$-sparse polynomial over a field $F$ on a semilattice $X$. Let $S$ be a finite subset of $X$ that is stable with respect to $f$. Then $\left| terms_f(S) \right| \leqq t$.*

Before proving this theorem, we state two algebraic lemmas that will be used in its proof.

We say that an element $s \in F$ is *a square* in $F$ if there exists an element $r \in F$ for which $r^2 = s$.

**Lemma 3** *Let $F$ be a field, and let $A \subseteq F$ be a finite set of elements of $F$. Then there exists a field $E$ of which $F$ is a subfield, and in which each element of $A$ is a square.*

We define addition between two vectors $\mathbf{a},\mathbf{b} \in F^t$ in the usual way. Thus, $\mathbf{a} + \mathbf{b}$ is that vector $\mathbf{c} \in F^t$ for which $c_i = a_i + b_i$ for $i = 1, ...,t$. Similarly, $\mathbf{a} \cdot \mathbf{b} = \Sigma_{i=1}^t a_i b_i$ is the standard inner product of $\mathbf{a}$ and $\mathbf{b}$.

**Lemma 4** *Let $A \subseteq F^t$ be a set of vectors over a field $F$ such that, for all $\mathbf{a},\mathbf{b} \in A$:*

*1. $\mathbf{a} \cdot \mathbf{a} \neq 0$, and*

*2. if $\mathbf{a} \neq \mathbf{b}$ then $\mathbf{a} \cdot \mathbf{b} = 0$.*

*Then $\left| A \right| \leqq t$.*

**Proof of Theorem 2:** Let $f$ be the polynomial

$$f(\mathbf{x}) = \sum_{i=1}^{t} c_i \pi_{\mathbf{t}_i}(\mathbf{x})$$

where each $c_i \in F$ and $t_i \in X$. Let $h = hyp_f(S)$.

We assume that $S$ is properly stable. We make this assumption without loss of generality since adding non-counterexamples to $S$ does not affect its manifest hypothesis.

By Lemma 3, the field $F$ can be extended to another field $E$ in which each of the coefficients $c_i$ is a square. We define a function $\tau : X \to E^t$ by the rule:

$$\tau(\mathbf{a}) = (\sqrt{c_1}\,\pi_{\mathbf{t}_1}(\mathbf{a}), ..., \sqrt{c_t}\,\pi_{\mathbf{t}_t}(\mathbf{a}))$$

where $\sqrt{c_i}$ is some element whose square equals $c_i$. Informally, $\tau(\mathbf{a})$ encodes the terms of $f$ that are satisfied by $\mathbf{a}$: if $\mathbf{t}_i \leqq \mathbf{a}$ (so that the corresponding term is satisfied), then the $i$th component of $\tau(\mathbf{a})$ is $\sqrt{c_i}$; otherwise, this component is 0. Note that the value $f(\mathbf{a})$ can be recovered from $\tau(\mathbf{a})$ simply by taking its inner product with itself since

$$\tau(\mathbf{a}) \cdot \tau(\mathbf{a}) = \sum_{i=1}^{t} c_i \pi_{\mathbf{t}_i}(\mathbf{a}) = f(\mathbf{a}). \qquad (6)$$

More generally,

$$\tau(\mathbf{a}) \cdot \tau(\mathbf{b}) = \sum_{i=1}^{t} c_i \pi_{\mathbf{t}_i}(\mathbf{a} \wedge \mathbf{b}) = f(\mathbf{a} \wedge \mathbf{b}) \qquad (7)$$

since $\pi_{\mathbf{t}}(\mathbf{a}) \cdot \pi_{\mathbf{t}}(\mathbf{b}) = \pi_{\mathbf{t}}(\mathbf{a} \wedge \mathbf{b})$ for any $\mathbf{t}$, by definition of the meet operator.

Finally, we define the function $\gamma : X \to E^t$. This function is defined inductively for $\mathbf{a} \in S$ by the rule:

$$\gamma(\mathbf{a}) = \tau(\mathbf{a}) - \sum_{\substack{\mathbf{a'} \in terms(S) \\ \mathbf{a'} < \mathbf{a}}} \gamma(\mathbf{a'}). \tag{8}$$

Notice that $\gamma$'s definition mimics the definition of the coefficients $\tilde{h}$ (a) of $hyp(S)$ given in equation (4). Here, $\tau(\mathbf{a})$ has taken the role of $f(\mathbf{a})$, and $\gamma(\mathbf{a})$ has taken the role of $\tilde{h}$ (a). In fact, just as we saw that $\tau(\mathbf{a}) \cdot \tau(\mathbf{a}) = f(\mathbf{a})$, so it also turns out to be the case that $\gamma(\mathbf{a}) \cdot \gamma(\mathbf{a}) = \tilde{h}$ (a) for all $\mathbf{a} \in S$; in particular, this implies that $\gamma\mathbf{a} \cdot \gamma\mathbf{a} \neq 0$ for all $\mathbf{a} \in terms(S)$.

Moreover, if a and b are distinct elements in $terms(S)$, we will see that their images under $\gamma$ are perpendicular, i.e., $\gamma(\mathbf{a}) \cdot \gamma(\mathbf{b}) = 0$. These properties, which we state formally in the next lemma, will allow us to apply Lemma 4 to complete the proof of the theorem.

**Lemma 5** *For all* $\mathbf{a}, \mathbf{b} \in terms(S)$, *the following hold:*

*1.* $\gamma(\mathbf{a}) \cdot \gamma(\mathbf{a}) \neq 0$.

*2. If* $\mathbf{a} \neq \mathbf{b}$ *then* $\gamma(\mathbf{a}) \cdot \gamma(\mathbf{b}) = 0$.

**Proof**: This follows by a rather involved induction argument. The details are omitted. ∎

Lemma 5 clearly implies that $\gamma$ is injective on the restricted domain $terms(S)$, and moreover, that the set

$$\gamma(terms(S)) = \{\gamma(\mathbf{a}) : \mathbf{a} \in terms(S)\}$$

satisfies the hypotheses of Lemma 4. Thus, $|terms(S)| = |\gamma(terms(S))| \leq t$. ∎

The next theorem will be helpful in proving that our algorithm is guaranteed to make progress on each iteration. Informally, it states that if $S$ is properly stable, then adding elements to $S$ can only increase the sparcity of its manifest hypothesis. Note that this property does not hold in general for unstable sets, or even for sets that are stable but not properly stable.

**Theorem 6** *Let* $f : X \to F$ *where* $F$ *is a field and* $X$ *is a semilattice. Let* $S \subseteq X$ *be finite and properly stable with respect to f. Let* $S' \subseteq X$ *be a finite superset of S. Then* $|terms_f(S)| \leq |terms_f(S')|$.

**Proof:** Let $h = hyp_f(S')$. Then, by Lemma 1, $h$ is consistent with $f$ on $S \subseteq S'$. Thus, $hyp_f(S) = hyp_h(S)$ and $S$ is properly stable with respect to $h$. Therefore, by Theorem 2, $|terms_f(S)| = |terms_h(S)|$ is at most the sparcity of $h$, which is exactly $|terms_f(S')|$. ∎

## 4.5 Analysis and Correctness

Using the theorems proved in the last section, we are now ready to fully analyze our algorithm.

For a set $S \subseteq X$ and integer $r$, we denote by $S^{\leq r}$ the set of elements in $S$ of height at most $r$: $S^{\leq r} = \{\mathbf{a} \in S : \|\mathbf{a}\| \leq r\}$.

We begin by proving the essential properties of subroutine $\text{E}_{\text{ASY}}\text{C}_{\text{OUNTEREXAMPLE}}$.

**Lemma 7** *Let* $S_i$ *and* $S_f$ *be the initial and final values of program variable S on a call to* $\text{E}_{\text{ASY}}\text{C}_{\text{OUNTEREXAMPLE}}$, *and let* **c** *be the value returned by the subroutine. Then the following hold:*

*1. If* $S_i$ *is stable then* $\mathbf{c} = \text{"}_{\text{STABLE}}\text{"}$ *and* $S_f$ *is properly stable.*

*2. If* $S_i$ *is not stable, then* **c** *is a counterexample for* $hyp(S_f)$ *and* $S_f^{\leq \|\mathbf{c}\|}$ *is properly stable.*

*3. The number of membership queries made during the execution of* $\text{E}_{\text{ASY}}\text{C}_{\text{OUNTEREXAMPLE}}$ *is at most*

$$\binom{t+1}{2}.$$

**Proof**:

Part 1: If $S_i$ is stable, then $\text{E}_{\text{ASY}}\text{C}_{\text{OUNTEREXAMPLE}}$ tests every pair $\mathbf{a}, \mathbf{b} \in terms(S_i)$ and discovers that for none of these is $\mathbf{a} \wedge \mathbf{b}$ a counterexample. Thus, for each such pair is $\mathbf{a} \wedge \mathbf{b}$ added to $S$. It follows that $\text{E}_{\text{ASY}}\text{C}_{\text{OUNTER-EXAMPLE}}$ returns the flag $\text{"}_{\text{STABLE}}\text{"}$, and moreover that $S_f$ is properly stable.

Part 2: If $S_i$ is not stable, then for some pair $\mathbf{a}, \mathbf{b} \in terms(S_i)$, $\mathbf{a} \wedge \mathbf{b}$ is a counterexample so the subroutine returns a counterexample c rather than the flag $\text{"}_{\text{STABLE}}\text{"}$. Suppose that $\mathbf{a}, \mathbf{b}$ and $T$ are as in the subroutine at the point at which $\mathbf{c} = \mathbf{a} \wedge \mathbf{b}$ is returned. To see that $S_f^{\leq \|\mathbf{c}\|}$ is properly stable, consider a pair $\mathbf{a'}, \mathbf{b'} \in terms(S_f^{\leq \|\mathbf{c}\|}) \subseteq terms(S_f)$. Since **c** is a counterexample, $\mathbf{c} \neq \mathbf{a}$ (by Lemma 1) so $\max(\|\mathbf{a'}\|, \|\mathbf{b'}\|) \leq \|\mathbf{c}\| < \|\mathbf{a}\|$. Thus, $\mathbf{a'}, \mathbf{b'} \in T$ because of the greedy order in which elements are tested and added to $T$. Since $\text{E}_{\text{ASY}}\text{-}\text{C}_{\text{OUNTEREXAMPLE}}$ did not halt when $\mathbf{a'}, \mathbf{b'}$ were tested, $\mathbf{a'} \wedge \mathbf{b'}$ cannot be a counterexample. Thus, $\mathbf{a'} \wedge \mathbf{b'}$ was added to $S_f$ at line 209,

and therefore, $\mathbf{a'} \wedge \mathbf{b'} \in S_f^{\leq \|\mathbf{c}\|}$. Hence, $S_f^{\leq \|\mathbf{c}\|}$ is properly stable.

To prove the bound given in part 3 on the number of membership queries, it suffices to show that $|T| \leq t$ at all times. If $S_i$ is stable, then $T \subseteq terms(S_i)$ so, by Theorem 2, $|T| \leq |terms(S_i)| \leq t$. If $S_i$ is not stable, then $T \subseteq terms(S_f^{\leq \|\mathbf{c}\|})$ and by part 2 of this Lemma, $S_f^{\leq \|\mathbf{c}\|}$ is stable; thus, again applying Theorem 2, $|T| \leq |terms(S_f^{\leq \|\mathbf{c}\|})| \leq t.$ ∎

Next, we prove some of the basic properties of $A_{DD}E_{LEMENT}$.

**Lemma 8** *Let $S_i$ and $S_f$ be the initial and final values of program variable S on a call to $A_{DD}E_{LEMENT}$ from $L_{EARN}P_{OLY}$; let $\mathbf{c}_i$ and $\mathbf{c}_f$ be similarly defined for $\mathbf{c}$. Then the following hold:*

*1. $\mathbf{c}_i$ is a counterexample for hyp($S_i$), and the set $S_i^{\leq \|\mathbf{c}_i\|}$ is properly stable;*

*2. the set $S_f^{\leq \|\mathbf{c}_f\|}$ is properly stable;*

*3. at most t membership queries are made during the entire execution of thesubroutine.*

**Proof**: When $A_{DD}E_{LEMENT}$ was called from $L_{EARN}P_{OLY}$, it was passed a parameter $\mathbf{c}_i$ that was obtained either from $E_{QUIV}$ or from $E_{ASY}C_{OUNTEREXAMPLE}$. In the latter case, part 1 of the lemma follows immediately from part 2 of Lemma 7. In the former case, the result follows from the assumed properties of the equivalence oracle, and from the fact that $S$ is properly stable prior to each call to $E_{QUIV}$ (by part 1 of Lemma 7).

For part 2, consider the behavior of the algorithm after the program variable c has been set to $\mathbf{c}_f$; this setting either holds initially (if $\mathbf{c}_i = \mathbf{c}_f$), or occurs at some later point after executing line 307. In either case, on the next iteration of the outer loop (lines 302-313), $\ell = \|\mathbf{c}_f\|$, and, on each succeeding execution of the loop, $\ell$ is decremented (since c never changes again). Thus, for each $\mathbf{a} \in terms(S_i)$ with $\|\mathbf{a}\| \leq \|\mathbf{c}_f\|$, $\mathbf{a} \wedge \mathbf{c}_f$ is at some point tested and found not to be a counterexample. Using part 1 of this lemma, and since $\|\mathbf{c}_f\| \leq \|\mathbf{c}_i\|$, it follows that $(S_i \cup \{\mathbf{c}_f\})^{\leq \|\mathbf{c}_f\|}$ is stable, and therefore that $S_f^{\leq \|\mathbf{c}_f\|}$ is properly stable.

Part 3 follows immediately from Theorem 2 since $S_i^{\leq \|\mathbf{c}_i\|}$ is stable and since each element of $terms(S_i^{\leq \|\mathbf{c}_i\|})$ is tested at most once. (Note that $\ell$ decreases on each iteration of the outer loop since if $\mathbf{a} \wedge \mathbf{c}$ is a counterexample as at line 307 then $\mathbf{a} \wedge \mathbf{c} \notin S_i$ so $\|\mathbf{a} \wedge \mathbf{c}\| < \|\mathbf{a}\| = \ell$.) ∎

Next, we use the preceding results to show that the subroutine $A_{DD}E_{LEMENT}$ is called at most $nt + 1$ times, where $n$ is the height of $X$ (i.e., the number of variables if $X$ is the boolean lattice). This fact will allow us immediately to bound the number of equivalence queries made, and will be helpful for bounding the number of membership queries.

**Lemma 9** *Given access to a target t-sparse polynomial f on a height-n semilattice, algo- rithm $L_{EARN}P_{OLY}$ halts after executing subroutine $A_{DD}E_{LEMENT}$ at most $nt + 1$ times.*

**Proof**: Let $U = \{1,...,n\} \times \{1,...,t\} \cup \{(0,1)\}$. We will describe below a procedure for "marking" elements of $U$. Initially, all elements of $U$ are unmarked. We will show that exactly one element is marked on each execution of $A_{DD}E_{LEMENT}$, and we will also show that no element is ever marked twice. Thus, $A_{DD}E_{LEMENT}$ is executed at most $|U| = nt + 1$ times.

Specifically, immediately following $A_{DD}E_{LEMENT}$'s execution, we "mark" element

$$p(\mathbf{c}, S) = (\|\mathbf{c}\|, |terms(S^{\leq \|\mathbf{c}\|})|)$$

where $\mathbf{c}$ and $S$ are as given in the subroutine. (This marking is not actually performed by the algorithm - we use it merely as an aid in proving the theorem.)

By part 2 of Lemma 8, the set $S^{\leq \|\mathbf{c}\|}$ is properly stable. Thus, by Theorem 2, if $\|\mathbf{c}\| > 0$ then $p(\mathbf{c}, S)$ is indeed an element of $U$. If $\|\mathbf{c}\| = 0$ then $\mathbf{c} = \perp$ and $terms(S^{\leq \|\mathbf{c}\|}) = \{\mathbf{c}\}$ so $p(\mathbf{c}, S) = (0,1)$.

It remains to show that no element of $U$ is marked twice. Suppose to the contrary that the same element is marked on two separate calls to $A_{DD}E_{LEMENT}$, once when $\mathbf{c} = \mathbf{c}_1$ and $S = S_1$, and again later when $\mathbf{c} = \mathbf{c}_2$ and $S = S_2$. That is, $p(\mathbf{c}_1, S_1) = p(\mathbf{c}_2, S_2)$. Let $r = \|\mathbf{c}_1\| = \|\mathbf{c}_2\|$.

Note that $\mathbf{c}_2 \notin S_1$ and $\mathbf{c}_2 \in terms(S_2)$ since $\mathbf{c}_2$ was a counterexample before being adding to $S_2$. Thus, $S_1^{\leq r} \subseteq S_2^{\leq r} - \{\mathbf{c}_2\}$ (since the algorithm never deletes elements from $S$) so, by Theorem 6,

$$|terms(S_1^{\leq r})| \leq |terms(S_2^{\leq r} - \{\mathbf{c}_2\})|.$$

Since $\mathbf{c}_2 \in terms(S_2)$, and since $\mathbf{c}_2$ is not less than any element in $S_2^{\leq r}$, it follows from the manner in which the manifest hypothesis is computed that $terms(S_2^{\leq r} - \{\mathbf{c}_2\}) = terms(S_2^{\leq r})-\{\mathbf{c}_2\}$. Thus,

$$|terms(S_1^{\leq r})| \leq |terms(S_2^{\leq r})| - 1 < |terms(S_2^{\leq r})|.$$

This contradicts that $p(\mathbf{c}_1, S_1) = p(\mathbf{c}_2, S_2)$. ∎

Finally, we are ready to prove Theorem 10, the main result of this paper:

**Theorem 10** *Given access to equivalence and membership queries for a target t-sparse poly-nomial f over a field F on a height-n semilattice, the algorithm $L_{EARN}P_{OLY}$ halts and out- puts a hypothesis equivalent to f in polynomial time after making at most $nt + 2$ equivalence queries and $(nt + 1)(t^2 + 3t)/2$ membership queries.*

**Proof**: As is typically the case for equivalence-query algorithms, the procedure is automatically correct (in the sense that it outputs a hypothesis equivalent to the target) if it can be shown to halt after a bounded number of queries.

Since $A_{DD}E_{LEMENT}$ is executed at least once following each unsuccessful equivalence query, by Lemma 9, the number of equivalence queries is at most $nt + 2$. Also, $E_{ASY}$-$C_{OUNTEREXAMPLE}$ is executed exactly once following each execution of $A_{DD}E_{LEMENT}$. Thus, combining Lemmas 7, 8 and 9, we see that the number of membership queries is at most

$$(nt + 1)(t + \binom{t+1}{2}) = (nt + 1)(t^2 + 3t)/2.$$

Finally, it is straightforward to verify using the lemmas developed above that the algorithm- runs in polynomial time. ∎

As an immediate corollary, Theorem 10 shows that a $t$-sparse polynomial $f$ over a field $F$ defined on $n$ boolean variables can be learned in polynomial time using the same number of queries given in the theorem's statement.

## 4.6 Applications and Extensions

In this section, we describe a number of applications and extensions of our main result.

**Multilinear polynomials.** We begin by showing that our algorithm can be used as a subroutine for learning multilinear polynomials when the domain of each variable is the entire field $F$, rather than $\{0, 1\}$. To prove this, it suffices to show that any counterexample in $F^n$ can be used to derive another counterexample in $\{0, 1\}^n$.

Let $f$ be the target multilinear polynomial, and let $h$ be a hypothesis. Let $d = f - h$. Suppose $c$ is a counterexample to $h$ and that there exists some $i$ for which $c_i \notin \{0,1\}$. We partially evaluate $d$ by fixing all the variables $x_j$ to be $c_j$ for $j \neq i$. We thus obtain the univariate polynomial $d'(x_i) = ax_i + b$ for some $a, b \in F$. Clearly, if $d'(0) = d'(1) = 0$ then $a = b = 0$ contradicting that $d'(c_i) \neq 0$. Therefore, there exists $y \in \{0, 1\}$ such that $d'(y) \neq 0$. Thus the vector $c'$ obtained from $c$ by replacing $c_i$ with $y$ is a counterexample to $h$, and such a $c'$ can be found with at most two membership queries. Repeating this process at most $n$ times we produce a counterexample in $\{0, 1\}^n$.

Thus we have proved that a multilinear polynomial $f : F^n \to F$ over a field $F$ can be learned efficiently with membership and equivalence queries.

**Infinitely many attributes.** Our main algorithm was shown to be effective for learning polynomials defined on any semilattice of finite height. The prime example of such a domain is of course the boolean lattice $\{0, 1\}^n$. Here is another example: Let $A$ be an infinite set, and let $\mathcal{A} = \{B \subseteq A : |B| \leq n\}$ be the collection of all subsets of $A$ of cardinality at most $n$. Let the collection $\mathcal{A}$ be partially ordered by inclusion (i.e., $B \leq C$ if and only if $B \subseteq C$).

Then $\mathcal{A}$ is a semilattice of height $n$, so our algorithm can be applied to efficiently learn a polynomial defined on it.

In fact, if we regard the set $A$ as a collection of "attributes," then it becomes clear that a polynomial on this semilattice is just an ordinary polynomial defined over an infinite collection of variables (corresponding to the attributes in $A$), and a sample point (i.e., an element of $\mathcal{A}$) consists of a set of at most n attributes that hold for that example. In other words, the problem of learning a polynomial on this semilattice is exactly the problem of learning an ordinary polynomial in Blum's "infinite attribute" model ("Learning boolean functions in an infinite attribute space," *Machine Learning*, 9(4):373-386, 1992), and so we obtain as a corollary to our main result that polynomials can be exactly identified in the infinite attribute model with membership and equivalence queries. Thus, although Blum gives a general technique for converting a "finite attribute" algorithm into one in the infinite attribute model, we obtain this result for polynomials by the direct argument given above.

**Semilattices with infinite chains.** Recall that our proof of the correctness and efficiency of our algorithm required that the target polynomial be defined on a semilattice of finite height. The finite-height requirement is, in general, necessary in order to achieve exact identification. For instance, the real interval [0,1] forms a semilattice under the usual ordering, but no element of this set (except 0) has finite height. It is not hard to see that an adversarial oracle for equivalence and membership queries can force the learning algorithm to make an infinite number of queries, even if the target polynomial f is known to consist of a single term with coefficient 1 (so that, for some $a \in [0,1]$, $f(x)$ is 1 if $x \geq a$ and 0 otherwise).

However, if our goal is simply to *approximate* the target polynomial, then we can, in many situations, modify our algorithm to handle polynomials defined on a semilattice X that is not necessarily of finite height. More specifically, let $f : X \to F$ be the target polynomial of sparcity $t$, and let $S \subseteq X$ be a finite sample labeled by $f$. We claim that, given access to a membership oracle for $f$, our algorithm can be used to efficiently construct a hypothesis polynomial $h$ of sparcity at most $t$ that is consistent with $f$ on $S$. The running time of the procedure is polynomial in $t$ and $|S|$ (and any other parameters that may be relevant to the particular problem at hand).

To see that this is so, let $X'$ be the subsemilattice of X obtained by closing the set $S$ under the meet operation; that is, $X'$ consists of all elements of $X$ which are the meet of a subset of the elements of $S$. It is not hard to show then that $X'$ is a finite semilattice of height at most $|S|$. Further, the target polynomial $f$ can be replaced by a polynomial $f' : X' \to F$ whose terms are all in $X'$ and that equals $f$ on all elements of $X'$. (Specifically, $f'$ *can be derived from f by replacing each term* $\pi_t$ *by* $\pi_{t'}$ *where* $t'$ *is the meet of the set* $\{a \in X' : t \leq a\}$.) For our simulation, we regard $f'$ as the target polynomial, $X'$ as the target semilattice, and we simulate the equivalence oracle by responding to each equivalence query with any element of $S$ on which $f$ (or, equivalently, $f'$) disagrees with the conjectured hypothesis (or with the "$_{\text{EQUIVALENT}}$" flag if no such element exists). By the arguments above, and by Theorem 10, this simulation will produce a hypothesis of sparcity at most t that is consistent with $f$ on $S$ in time polynomial in $t$ and $|S|$.

In many situations, such an algorithm for efficiently finding a "small" hypothesis consistent with a given sample is sufficient to guarantee efficient PAC-learnability. For example, if $X = \mathbb{R}^m$ is partially ordered by domination (so that $\mathbf{a} \leq \mathbf{b}$ if and only if $a_i \leq b_i$ for $i = 1,...,m$), and if $F$ is, say, $\mathbb{R}$ or GF(2), then a uniform convergence argument implies that a "small" hypothesis consistent with a randomly chosen sample will, with high probability, be a good approximation of the target function. (See, for instance, Blumer, Ehrenfeucht, Haussler and Warmuth's "Learnability and the Vapnik-Chervonenkis dimension," *Journal of the Association for Computing Machinery,* 36(4):929-965, October 1989; or Haussler's "Decision theoretic generalizations of the PAC model for neural net and other learning ap-plications," *Information and Computation,* 100(1):78-150, 1992.) Thus, by the arguments above, such polynomials can be efficiently PAC-learned from random examples given access to a membership oracle.

**Functions representable by sparse polynomials.** Finally, returning to the boolean lattice, we make some remarks on the sorts of functions that can be represented by sparse polynomials.

As noted briefly above, every function $g : \{0,1\}^\ell \to F$ can be represented by a $2^\ell$-sparse polynomial. Call such a function $\ell$-*arbitrary*. Then clearly any $\ell$-*arbitrary* function can be learned by our algorithm in time polynomial in $2^\ell$. More generally, we can replace each variable of $g$ with a monomial $\mathbf{x}^\mathbf{a}$ for arbitrary $\mathbf{a} \in \{0, 1\}^n$. The resulting function $g(\mathbf{x}^{\mathbf{a}_1},... , \mathbf{x}^{\mathbf{a}_\ell})$, when "multiplied out," can be represented by a $2^\ell$-sparse polynomial over $x_1,...,x_n$. Generalizing further, we see that the $\ell$-arbitrary functions can be added together to obtain a function of the form

$$\sum_{i=1}^{t} g_i\left(\mathbf{x}^{\mathbf{a}_{i1}}, \ldots, \mathbf{x}^{\mathbf{a}_{i\ell}}\right)$$

which can be represented by a $t2^\ell$-sparse polynomial on $n$ boolean variables. Thus, such functions can be learned in time polynomial in $n$, $t$ and $2^\ell$.

As a specific example of this technique, we can show that logarithmic-depth decision trees can be learned in polynomial time: For each leaf $i$, let $p_i(\mathbf{x})$ be the value of the leaf node if it is reached on input $\mathbf{x}$, and 0 otherwise. The function computed by the decision tree is then

$$\sum_{i=1}^{t} p_i(\mathbf{x})$$

where $t$ is the number of leaves in the tree. Since $p_i(\mathbf{x})$ can be viewed as an $\ell$-arbitrary function on the $\ell$ variables occurring along the path to leaf $i$, this shows that the computed function can be represented by a $t2^\ell$-sparse polynomial. Thus, the decision tree can be exactly identified in polynomial time if its depth $\ell$ is logarithmic.

The same result holds if each node's decision function is replaced by an arbitrary (monotone) monomial, rather than a single variable. Thus, we have shown that logarithmic-depth decision trees in which each node is decided by a monomial can be exactly identified using equivalence and membership queries. Although it was known that this was possible for (ordinary) logarithmic-depth decision trees by previous results, it appears that this result could not have been derived using previous methods for the case in which each decision node is a monomial.

## 5 Conclusion

The foregoing *Detailed Description* has disclosed to those of ordinary skill in the art how to implement the method of the invention for functions of Boolean variables and has shown that the principles of the method may also be employed for functions of other than Boolean variables. While the implementation of the method disclosed herein is the best presently known to the inventors, other implementations which apply the principles of the invention are also possible.

## Claims

1. A method practiced in a computer system of finding a result function which is an approximation or an equivalent of a target function, the method comprising the steps of:

    1. making a hypothesis function;

    2. repeating until termination the steps of

        a. determining whether there is a first counterexample for which the hypothesis function and the target function are not consistent;

        b. if there is no such first counterexample, terminating the method and returning the hypothesis function as the result function;

        c. adding at least one example formed using a meet operation to a set of examples which are consistent with the target function;

        d. making a new hypothesis function which is consistent with the set of examples; and

        e. using the new hypothesis function as the hypothesis function.

2. The method set forth in claim 1 wherein the step of adding at least one example comprises repeatedly performing the steps of:

    i. using the first counterexample and the meet operation to add at least one example to the set of examples;

    ii. attempting to find a second counterexample which is the meet of two terms of the hypothesis function such that the maximum height of the terms is minimized;

    iii. if no second counterexample is found, terminating the step of adding at least one example; and

    iv. if the second counterexample is found, adding the second counterexample to the set of examples and using the second counterexample as the first counterexample.

13

LEARNPOLY
*Given:* access to oracles EQUIV and MEMBER for target polynomial $f$
*Output:* a hypothesis equivalent to $f$
101   $S \leftarrow \emptyset$.
102   **loop**
103       $c \leftarrow$ EQUIV($hyp(S)$)
104       **if c = "EQUIVALENT" then halt and output** $hyp(S)$
105       **repeat**
106         ADDELEMENT(**c**)
107         $c \leftarrow$ EASYCOUNTEREXAMPLE()
108       **until (c = "STABLE")**
109   **end**

Figure 1.

EASYCOUNTEREXAMPLE
*Return:* an easily observable counterexample, or the flag "STABLE" if none exists
201   $T \leftarrow \emptyset$
202   **while** $terms(S) \neq T$
203       $a \leftarrow$ any minimum height element in $terms(S) - T$
204       **for b $\in T$**
205         query and record MEMBER(**a** $\wedge$ **b**) if necessary
206         **if a $\wedge$ b is a counterexample for** $hyp(S)$ **then**
207           **return a $\wedge$ b**
208         **else**
209           $S \leftarrow S \cup \{$**a** $\wedge$ **b**$\}$
210       **end**
211       $T \leftarrow T \cup \{$**a**$\}$
212   **end**
213   **return "STABLE"**

Figure 2.

ADDELEMENT

*Input:* a counterexample **c** for $hyp(S)$

$\ell \leftarrow ||\mathbf{c}||.$

**repeat**

    **for** $\mathbf{a} \in terms(S) : ||\mathbf{a}|| = \ell$

        query and record MEMBER($\mathbf{a} \wedge \mathbf{c}$) if necessary

        **if** $\mathbf{a} \wedge \mathbf{c}$ is a counterexample for $hyp(S)$ **then**

            $S \leftarrow S \cup \{\mathbf{c}\}$

            $\mathbf{c} \leftarrow \mathbf{a} \wedge \mathbf{c}$

            exit "**for**" loop

        **else**

            $S \leftarrow S \cup \{\mathbf{a} \wedge \mathbf{c}\}$

    **end**

    $\ell \leftarrow \min(\ell - 1, ||\mathbf{c}||).$

**until** $\ell = 0$

$S \leftarrow S \cup \{\mathbf{c}\}.$

Figure 3.

Figure 4.

Figure 5.

Figure 6.